# EUROPÄISCHE PATENTSCHRIFT

(11) **EP 0 688 270 B1**
(45) Veröffentlichungstag und Bekanntmachung des Hinweises auf die Patenterteilung: **02.04.1997**
(21) Anmeldenummer: 94910408.7
(22) Anmeldetag: 10.03.1994
(51) Int. Cl.: B60H 1/03, F01P 3/20

(54) **HEIZKREISLAUF-SYSTEM EINES FAHRZEUGES**
VEHICLE HEAT-CIRCULATION SYSTEM
SYSTEME A CIRCUIT DE CHAUFFAGE POUR VEHICULE

(30) Priorität: 12.03.1993 DE 4307841
(43) Veröffentlichungstag der Anmeldung: 27.12.1995
(73) Patentinhaber: WEBASTO THERMOSYSTEME GmbH, D-82131 Stockdorf (DE)
(72) Erfinder: VEITENHANSL, Horst, D-82538 Geretsried (DE)
(74) Vertreter: Wiese, Gerhard
(86) Internationale Anmeldenummer: EP9400755
(87) Internationale Veröffentlichungsnummer: WO9420321

(56) Entgegenhaltungen:
- EP-A- 0 234 802
- DE-A- 4 042 404
- FR-A- 2 580 557

## Beschreibung

Die Erfindung betrifft ein Heizkreislauf-System eines Fahrzeuges gemäß dem Oberbegriff des Patentanspruchs 1.

Ein solches Kreislauf-System, bei dem ein von einem motorunabhängigen Heizgerät erwärmbarer Wärmeträger wahlweise unter Einbeziehung des Verbrennungsmotors in einem großen Weislauf (Inline-Kreislauf) oder unter Umgehung desselben über eine Bypaßleitung in einem nur den Fahrzeugwärmetauscher und das Heizgerät umfassenden kleinen Kreislauf umgewälzt wird, ist aus der DE-A1-40 22 731 bekannt. Bei diesem System werden die vorstehend genannten Betriebsweisen mittels eines einen zusätzlichen elektrischen Antrieb erfordernden Ventils gesteuert. Dadurch erhöht sich der Einbauaufwand und auch - wie durch jedes zusätzliche Bauteil - die Ausfallwahrscheinlichkeit des Systems.

Der Erfindung liegt die Aufgabe zugrunde, ein einfaches System zur Realisierung verschiedener Wärmeträger-Kreisläufe bereitzustellen.

Diese Aufgabe wird erfindungsgemäß dadurch gelöst, daß die Umwälzpumpe in ihrer Drehrichtung umsteuerbar ist und je nach Drehrichtung des Wärmeträgers über zwei getrennte Austrittsöffnungen entweder in einen großen Kreislauf durch die Rücklaufleitung zum Verbrennungsmotor oder durch die Bypaßleitung in einen das Heizgerät und den Innenraum-Wärmetauscher umfassenden kleinen Kreislauf fördert. Somit wird durch eine einfache Drehrichtungsumkehr der Umwälzpumpe, die mittels eines umpolbaren Motors leicht realisierbar ist, eine Steuerung verschiedener Kreisläufe möglich, ohne zusätzliche mittels Fremdenergie betriebene Ventile zu benötigen.

In einer bevorzugten Ausführungsform ist jede der Austrittsöffnungen der Umwälzpumpe an eine von zwei mittels eines bewegbaren Teils dichtend voneinander getrennten Kammern eines Ventils angeschlossen, von denen eine mit der Rücklaufleitung und die andere mit der Bypaßleitung verbindbar ist. Das bewegbare Teil wird dabei in einfacher Weise unmittelbar vom Förderdruck der Umwälzpumpe bei Förderung in Richtung zur Bypaßleitung in Richtung auf die Kammer, die zur Rücklaufleitung führt, bewegt, und dichtet diese ab. Bei einer umgekehrten Förderung der Umwälzpumpe zur Rücklaufleitung wird das bewegbare Teil in Richtung der anderen Kammer bewegt, und dichtet den Zugang zur Bypaßleitung ab. Das bewegbare Teil kann als Membran ausgebildet sein und direkt durch eine ausbauchende Fläche zur Abdichtung der jeweiligen Leitung verwendet werden. Es können jedoch auch gemäß einer weiteren Ausführungsform zu beiden Seiten des bewegbaren Teils Dichtelemente zum Auf- und Zusteuern der Bypaß- bzw. der Rücklaufleitung vorgesehen sein.

Alternativ zu einer Ausbildung als Membran kann das bewegbare Teil auch als ein federgelagerter Kolben ausgebildet sein.

Die Umsteuerung der Umwälzpumpe erfolgt bevorzugt in Abhängigkeit von einem Temperaturwert des Wärmeträgers. Dies ist in besonders einfacher Weise mittels eines Thermoschalters realisierbar, der bevorzugt auf der Saugseite der Umwälzpumpe angeordnet ist.

Falls als dritte Betriebsweise eine Förderung sowohl in Richtung zum Motor als auch in Richtung zum Fahrzeugwärmetauscher erfolgen soll, wie dies beispielsweise im Kabinen-Nachtheizbetrieb eines LKW's zur Vermeidung häufiger Wiederstarts des Heizgerätes sinnvoll ist, so kann im bewegbaren Teil ein mittels eines integrierten Thermostatventils auf und zusteuerbarer Durchlaßkanal vorgesehen sein.

Besonders vorteilhaft im Hinblick auf einen reduzierten Einbauaufwand ist eine Anordnung, bei der die Umwälzpumpe und das Ventil eine einzige Baueinheit bilden, die vorzugsweise direkt am Heizgerät befestigbar ist.

Nachfolgend sind Ausführungsbeispiele der Erfindung anhand der Zeichnung beschrieben. Es zeigt:
- Fig. 1: Eine schematische Darstellung eines Heizkreislauf-Systems mit stark vergrößerter Teildarstellung einer Umwälzpumpe und eines Ventils,
- Fig. 2: einen horizontalen Schnitt längs der Linie II-II in Fig. 1,
- Fig. 3: ein Heizgerät mit angeflanschter Umwälzpumpe und Membranventil,
- Fig. 4: eine Variante eines Membranventils und
- Fig. 5: eine weitere Variante eines Ventils.

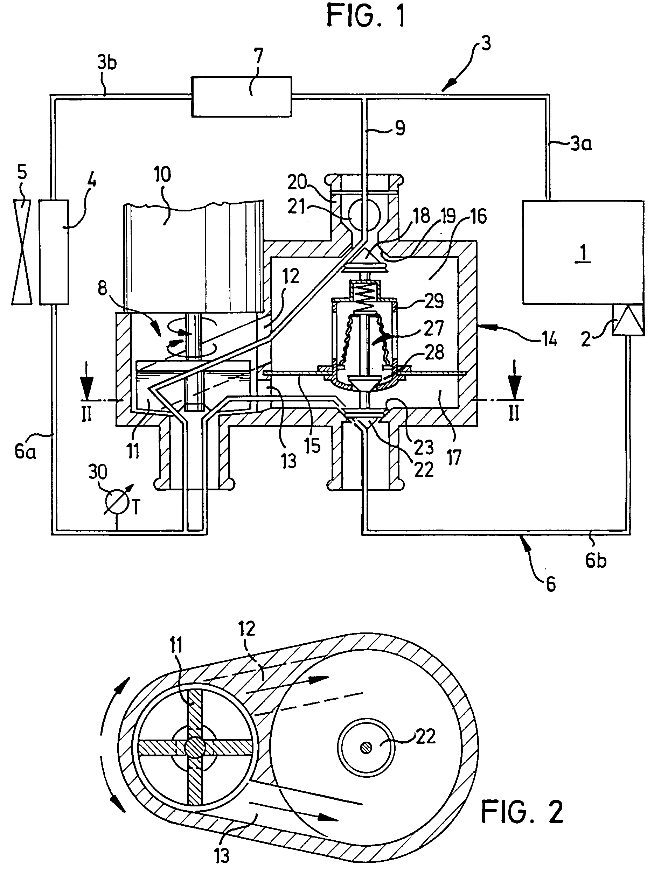

In Fig. 1 bilden ein von einem flüssigen Wärmeträger als Kühlmittel durchströmter Verbrennungsmotor 1 mit einer daran angeflanschten Pumpe 2, einer insgesamt mit 3 bezeichneten Vorlaufleitung, einem Fahrzeuginnenraum-Wärmetauscher 4 und einer insgesamt mit 6 bezeichneten Rücklaufleitung einen Heizkreislauf zur Erwärmung des Fahrzeuginnenraums bei Betrieb des Verbrennungsmotors 1. Der vom Wärmeträger durchströmte Innenraum-Wärmetauscher 4 gibt im Wärmetausch mit durch ein Gebläse 5 geförderter Luft Wärmeenergie an einen nicht gezeigten Fahrzeuginnenraum ab. Zum Vorheizen des Fahrzeuginnenraums bei stehendem Verbrennungsmotor 1 bzw. zum Zuheizen bei noch kaltem oder in einem ungünstigen Lastbereich laufenden Verbrennungsmotor 1 ist in der Vorlaufleitung 3 ein Heizgerät 7 vorgesehen.

Bei diesem handelt es sich um ein bekanntes, mittels flüssigem Brennstoff betriebenen Heizgerät, dessen Wärmetauscher ebenfalls vom flüssigen Wärmeträger durchströmt wird. Alternativ zu einer direkten Anordnung in der Vorlaufleitung 3 ist auch eine Anordnung des Heizgeräts 7 in einem dazu parallelen Zweig möglich.

Rücklaufleitung 6 und Vorlaufleitung 3 sind mittels einer Bypaßleitung 9 verbunden. Durch die Anschlußstellen der Bypaßleitung 9 wird die Vorlaufleitung in einen ersten Abschnitt 3a zwischen Verbrennungsmotor 1 und Bypaßleitung 9 sowie in einen zweiten Abschnitt 3b zwischen der Bypaßleitung 9 und dem Wärmetauscher 4 unterteilt. Ebenso wird die Rücklaufleitung 6 in einen ersten Abschnitt 6a zwischen Wärmetauscher 4 und Abzweig der Bypaßleitung 9 und in einen zweiten Abschnitt 6b zwischen Bypaßleitung 9 und Verbrennungsmotor 1 unterteilt.

Im ersten Abschnitt der Rücklaufleitung 6a ist eine Umwälzpumpe 8 angeordnet, die mittels eines umsteuerbaren Elektromotors 10 wahlweise rechtslaufend oder linkslaufend betrieben werden kann. Die Umwälzpumpe 8 ist saugseitig mit dem ersten Abschnitt 6a der Rücklaufleitung 6 verbunden. Druckseitig steht die Umwälzpumpe 8 je nach Drehrichtung des Pumpenrades 11 entweder über eine erste Austrittsöffnung 12 mit der Bypaßleitung 9 oder über eine zweite Austrittsöffnung 13 mit dem zweiten Abschnitt 6b der Rücklaufleitung 6 in Verbindung. Bei entsprechender Ausgestaltung des Pumpenrades 11 und des Gehäuses der Umwälzpumpe 8 kann diese Verbindung unmittelbar erfolgen; im beschriebenen Ausführungsbeispiel mit seinem einfachen mit geraden Schaufeln (Fig. 2) versehenen Pumpenrad erfolgt die druckseitige Anbindung an die Bypaßleitung 9 bzw. die Rücklaufleitung 6 über ein Ventil 14. Das Ventil 14 wird durch eine Membran 15 in eine erste Kammer 16 und eine zweite Kammer 17 unterteilt. In die erste Kammer 16 mündet die erste Austrittsöffnung 12 von der Umwälzpumpe 8 kommend ein und von ihr mündet die Bypaßleitung 9 aus. In die zweite Kammer 17 mündet die zweite Austrittsöffnung 13 ein und aus dieser mündet der zweite Abschnitt 6b der Rücklaufleitung 6 aus. Die Membran 15 ist im Gehäuse des Ventils 14 dichtend gelagert und ist innerhalb des von der ersten Kammer 16 und der zweiten Kammer 17 gebildeten Innenraumes des Ventils 14 in Fig. 1 in vertikaler Richtung bewegbar. Bei einer Bewegung der Membran 15 nach oben legt sich ein an ihrer Oberseite befestigtes Dichtelement 18 an einen Ventilsitz 19 an der Ausmündung zur Bypaßleitung 9 an. Bei einer Bewegung der Membran 15 nach unten legt sich ein unten an ihr befestigtes Dichtelement 22 an einen entsprechend geformten Ventilsitz 23 an der Ausmündung zur Rücklaufleitung 6 an.

Stromab des Ventilsitzes 19 an der Ausmündung zur Bypaßleitung 9 ist in einem am Ventil 14 befestigten Austrittsstutzen 20 ein Rückschlagventil 21 vorgesehen. Dieses verhindert eine Rückströmung vom Wärmeträgermedium aus der Bypaßleitung 9 in die erste Kammer 16. Dieses Rückschlagventil 21 kann jedoch auch entfallen.

Die Dichtelemente 18, 22 können entweder unmittelbar an der Membran 15 befestigt sein oder, wie in Fig. 1 gezeigt, an einem hülsenförmigen Körper 29, der die Membran 15 durchdringt und in den ein Thermostatventil 27 integriert ist, das bei Überschreiten einer bestimmten Wärmeträgertemperatur in der ersten Kammer 16 einen im Inneren des hülsenförmigen Körpers 29 angeordneten Durchlaßkanal 28 zur zweiten Kammer 17 freigibt.

Ausgehend von einem Start des Heizgerätes 7 bei stehendem Verbrennungsmotor 1 soll nachstehend die Funktion des in Fig. 1 und 2 dargestellten Heizkreislaufsystems beschrieben werden. Je nachdem, ob der Verbrennungsmotor 1 mit in den Vorheizbetrieb des Heizgerätes 7 einbezogen werden soll oder nicht, beginnt die Umwälzpumpe entweder in rechtsdrehendem oder in linksdrehendem Betrieb. Diese Auswahl kann über einen Wahlschalter am Bedienpanel vom Fahrer vorgewählt sein, sie kann sich auch aus der Art des Heizgerätestartes ableiten, und zwar je nachdem ob der Start mittels einer bekannten Vorwahluhr oder mittels einer Funkfernstarteinrichtung erfolgt ist. Zudem kann je nach Einsatzzweck eines Heizgerätes 7 auch eine fest verdrahtete Präferenzschaltung werksseitig oder von seiten der Einbauwerkstatt vorgegeben werden. Nachfolgend wird davon ausgegangen, daß das dargestellte Heizgerät 7 bevorzugt zunächst den Fahrzeuginnenraum über den Wärmetauscher 4 aufheizen soll. Somit startet die Umwälzpumpe in rechtsdrehendem Betrieb und fördert Wärmeträgermedium vom ersten Abschnitt der Rücklaufleitung 6a über die erste Austrittsöffnung 12 in die erste Kammer 16 des Ventils 14. Durch den Förderdruck der Umwälzpumpe 8, der sich in der ersten Kammer 16 des Ventils 14 aufbaut, wird dabei die Membran 15 nach unten gedrückt und das an ihr befestigte Dichtelement 22 legt sich an den Ventilsitz 23 an. Der zweite Abschnitt 6b der Rücklaufleitung 6 ist dadurch gesperrt und es kann kein Kühlwasser von der Umwälzpumpe 8 zum Motor 1 gelangen. Der Wärmeträger wird vielmehr vollständig über das Rückschlagventil 21 und die Bypaßleitung 9 zum Heizgerät 7 transportiert, dort aufgeheizt und über den zweiten Abschnitt 3b der Vorlaufleitung 3 zum Wärmetauscher 4 befördert.

Durch die Umgehung des kalten Motors 1, in dem sich ein Großteil des gesamten Wärmeträgermediums befindet, findet im kleinen Kreislauf zwischen Heizgerät 7 Warmetauscher 4 und Umwälzpumpe 8 eine sehr schnelle Aufheizung des Wärmeträgers, verbunden mit einer schnellen Aufheizung des Fahrzeuginnenraumes statt. Wird dabei mittels eines Temperatursensors 30 ein Überschreiten eines ersten Schwellenwertes des Wärmeträgers festgestellt, so wird der Elektromotor 10 umgepolt und die Umwälzpumpe 8 nunmehr linksdrehend betrieben. Dadurch wird der Wärmeträger nunmehr durch die zweite Austrittsöffnung 13 in die zweite Kammer 17 des Ventils 14 gefördert. Durch den sich dabei aufbauenden Druck in der Kammer 17 wird die Membran 15 nach oben bewegt, wobei sich das Dichtelement 22 vom Ventilsitz 23 abhebt, die Rücklaufleitung 6b freigibt und gleichzeitig das Dichtelement 18 an den Ventilsitz 19 anlegt und dadurch die Bypaßleitung 9 sperrt. Der Wärmeträger wird nunmehr im großen Kreislauf von der Umwälzpumpe 8 über die Rücklaufleitung 6b, den Verbrennungsmotor 1, die Vorlaufleitung 3, das Heizgerät 7, den Wärmetauscher 4 und den ersten Zweig der Rücklaufleitung 6a gefördert und wärmt dabei auch den Verbrennungsmotor 1 mit vor. Der Temperatursensor 30 kann, wie gezeigt, im ersten Abschnitt 6a der Rücklaufleitung angeordnet sein; er kann jedoch ebenso im Heizgerät 7 integriert sein.

Für eine zusätzliche Betriebsart, nämlich eine bevorzugte Innenraum-Beheizung im Dauerbetrieb, z.B. die Beheizung einer LKW-Fahrerkabine bei einem nächtlichen Halt, kann vom Fahrer über einen nicht dargestellten Schalter das temperaturabhängige Umpolen des Elektromotors 10 außer Kraft gesetzt werden. Die Umwälzpumpe 8 läuft dann kontinuierlich im Rechtslaut und fördert den Wärmeträger in die erste Kammer 16. Bei Erreichen eines vorbestimmten zweiten Schwellenwertes der Temperatur des Wärmeträgers, der über dem ersten Schwellenwert liegt, öffnet das Thermostatventil 27, gibt den Durchlaßkanal 28 zur zweiten Kammer 17 frei und hebt dadurch gleichzeitig das Dichtelement 22 vom Ventilsitz 23 ab. Dadurch wird ein Teil des geförderten Wärmeträgers weiterhin im kleinen Kreislauf über die Bypaßleitung 9 und gleichzeitig ein kleinerer Teil im großen Kreislauf über den Verbrennungsmotor 1 bewegt. Der zweite Temperaturschwellenwert für das Öffnen des Thermostatventils 27 ist so gewählt, daß er unterhalb des Schaltwertes liegt, der im Steuergerät des Heizgeräts 7 ein Umschalten vom Teillastbetrieb in eine Regelpause bewirkt. Somit werden bei dieser Betriebsart häufige Schaltvorgänge des Heizgeräts 7, insbesondere mit Geräuschemissionen und zusätzlichem elektrischen Energiebedarf verbundene Wiederstarts vermieden, und das Heizgerät 7 kann auf kleinster Leistungsstufe kontinuierlich betrieben werden. Das Thermostatventil 27 regelt durch die beschriebene Aufteilung des Wärmeträgerstroms diesen Zustand selbsttätig, geräuschlos und ohne Fremdenergiebedarf.

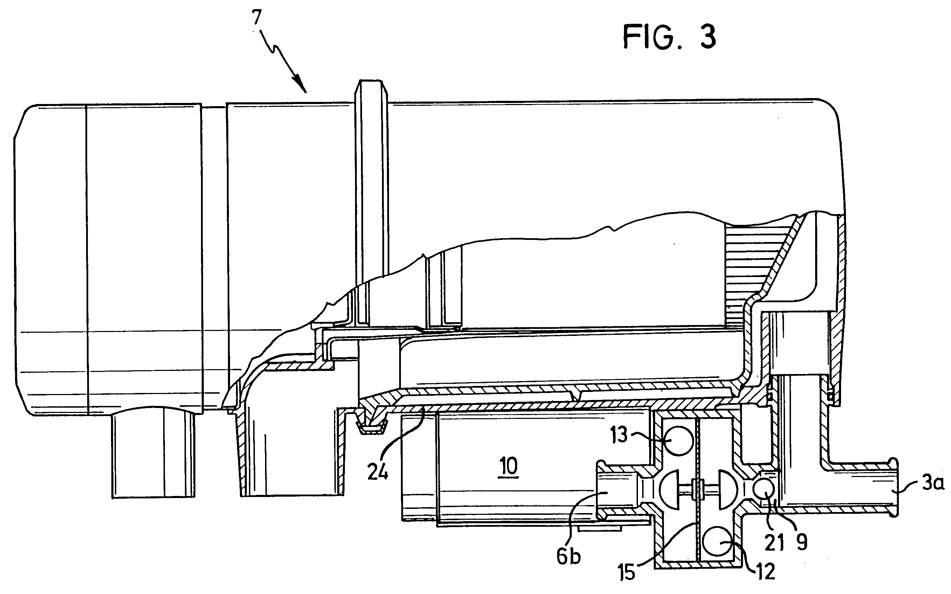

In Fig. 3 ist eine bevorzugte Ausführungsform der Erfindung dargestellt, bei der die Pumpe 8 mit dem Elektromotor 10 und dem Ventil 14 direkt am Gehäuse 24 des Heizgeräts 7 befestigt ist. Die übrigen Teile sind entsprechend ihrer Numerierung in den Fig. 1 und 2 bezeichnet. Durch diese integrierte Bauweise wird der Einbauaufwand für das Heizgerät entscheidend reduziert und es verkürzen sich die Leitungswege, wie am Beispiel der Bypaßleitung 9 zu ersehen ist, die sich auf einen sehr kurzen Abschnitt hinter dem Rückschlagventil 21 beschränkt.

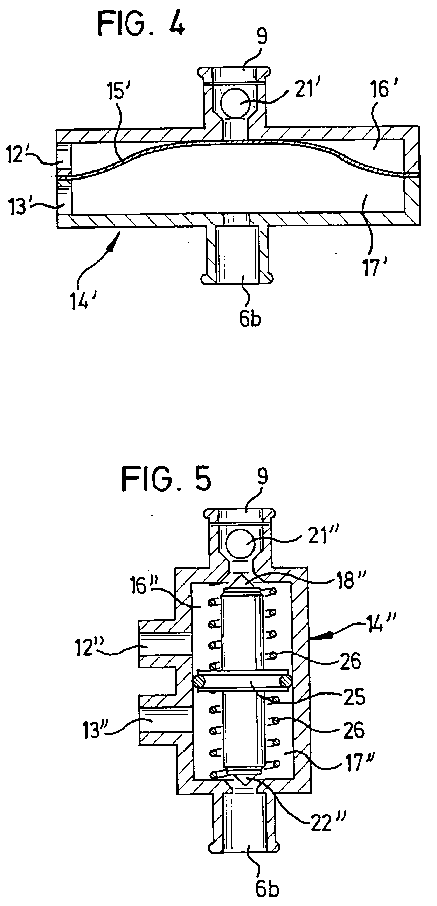

In Fig. 4 ist eine vereinfachte Variante eines Membranventils mit 14' bezeichnet. Im Gegensatz zur vorstehend beschriebenen Ausführungsform weist die Membran 15' in diesem Falle kein gesondertes Dichtelement an der Ober bzw. Unterseite auf, sondern bildet selbst durch Anlage mit ihrer Ober-beziehungsweise mit ihrer Unterseite an den jeweiligen Austrittsöffnungen der Kammern 16' bzw. 17' das entsprechende Dichtelement. Die übrigen Teile gleichen denen des ersten Ausführungsbeispiels und sind mit gleichen Bezugszeichen mit zusätzlichem Hochkomma versehen.

In Fig. 5 ist eine weitere Variante eines Ventils mit 14'' bezeichnet. Bei diesem werden eine erste Kammer 16'' und eine zweite Kammer 17'' mittels eines Dichtkolbens 25 voneinander getrennt, an dem an der Oberseite ein Dichtelement 18'' und an der Unterseite ein Dichtelement 22'' angeordnet sind. Die Austrittsöffnungen der nicht dargestellten Umwälzpumpe sind mit 12'' bzw. 13'' analog zum ersten Ausführungsbeispiel bezeichnet. Der Dichtkolben 25 ist durch zwei Federn 26 so gelagert, daß er in drucklosem Zustand der Kammern 16'' bzw. 17'' eine neutrale Mittelposition einnimmt. Bei Beaufschlagung einer der beiden Kammern 16'' bzw. 17'' bewegt sich der Dichtkolben 25 jeweils in Richtung der anderen Kammer 17'' bzw. 16'' wobei das dort befindliche Dichtelement 22'' bzw. 18'' zur Anlage an einem entsprechend geformten Ventilsitz des Ventils 14'' gerät. Auch der dort gezeigte Dichtkolben 25 ist selbstverständlich wie die Membran 15 des ersten Ausführungsbeispiels für eine Aufnahme eines Thermostatventiles 27 geeignet. Außerdem sind Ausführungen denkbar, die ohne die Federn 26 arbeiten oder bei denen nur eine Feder 26 in der Kammer 17'' für eine Vorspannung in Richtung auf einen Abschluß der Bypaßleitung 9 sorgt, sodaß in Grundstellung der große Kreislauf gefahren wird.

Mittels der Erfindung wird durch eine einfache Umsteuerung der Drehrichtung einer ohnehin vorhandenen Umwälzpumpe eine sichere Steuerung verschiedener Betriebsweisen eines Heizkreislaufsystemes ohne zusätzliche mittels Fremdenergie gesteuerte Ventile erreicht.

## Patentansprüche

1. Heizkreislauf-System eines Fahrzeuges mit
- einem Verbrennungsmotor (1),
- einem motorunabhängigen Heizgerät (7),
- einem Innenraum-Wärmetauscher (4),
- einer Umwälzpumpe (8) zur Förderung eines flüssigen Wärmeträgers,
- einer Bypaßleitung (9), die eine Rücklaufleitung (6,6a,6b) zwischen Wärmetauscher (4) und Verbrennungsmotor (1) mit einer Vorlaufleitung (3,3a,3b) zwischen Verbrennungsmotor (1) und Wärmetauscher (4) verbindet,
**dadurch gekennzeichnet**, daß die Umwälzpumpe (8) in ihrer Drehrichtung umsteuerbar ist und je nach Drehrichtung den Wärmeträger über zwei getrennte Austrittsöffnungen (12,13) entweder in einen großen Kreislauf (6b,3a,3b,6a) durch die Rücklaufleitung (6b) zum Verbrennungsmotor (1) oder durch die Bypaßleitung (9) in einen das Heizgerät (7) und den Innenraum-Wärmetauscher (4) umfassenden kleinen Kreislauf (9,3b,6a) fördert.

2. Heizkreislauf-System nach Anspruch 1, **dadurch gekennzeichnet**, daß jede der Austrittsöffnungen (12,13) an eine von zwei mittels eines bewegbaren Teils (15,15',25) dichtend voneinander getrennte Kammern (16,17;16',17';16'',17'') eines Ventils (14,14',14'') angeschlossen ist, von denen eine (17,17'17'') mit der Rücklaufleitung (6b) und die andere (16,16',16'') mit der Bypaßleitung (9) verbindbar ist.

3. Heizkreislauf-System nach Anspruch 2, **dadurch gekennzeichnet**, daß mit dem bewegbaren Teil (15,25) zwei jeweils in eine der Kammern (16,17;16'',17'') hineinragende Dichtelemente (18,22;18'',22'') zum Auf- und Zusteuern der Bypaßleitung (9) und der Rücklaufleitung (6b) verbunden sind.

4. Heizkreislauf-System nach Anspruch 2 oder 3, **dadurch gekennzeichnet**, daß das bewegbare Teil von einer Membran (15,15') gebildet wird.

5. Heizkreislauf-System nach Anspruch 2 oder 3, **dadurch gekennzeichnet**, daß das bewegbare Teil von einem Dichtkolben (25) gebildet wird.

6. Heizkreislauf-System nach einem der vorhergehenden Ansprüche, **dadurch gekennzeichnet**, daß die Umsteuerung der Umwälzpumpe (8) in Abhängigkeit von einem Temperaturwert des Wärmeträgers erfolgt.

7. Heizkreislauf-System nach Anspruch 6, **dadurch gekennzeichnet**, daß für die Umsteuerung der Umwälzpumpe ein Temperatursensor (30) vorgesehen ist.

8. Heizkreislauf-System nach Anspruch 7, **dadurch gekennzeichnet**, daß der Temperatursensor (30) auf der Saugseite der Umwälzpumpe (8) angeordnet ist.

9. Heizkreislauf-System nach einem der Ansprüche 2 bis 5, **dadurch gekennzeichnet**, daß im bewegbaren Teil (15;25) ein mittels eines integrierten Thermostatventils (27) auf- und zusteuerbarer Durchlaßkanal (28) vorgesehen ist.

10. Heizkreislauf-System nach einem der Ansprüche 2 bis 9, **dadurch gekennzeichnet**, daß die Umwälzpumpe (8) und das Ventil (14;14';14'') eine vorzugsweise am Heizgerät (7) befestigte Baueinheit bilden.

## Claims

1. A heating circuit system of a vehicle with
an internal combustion engine (1),
a heating device (7) independent of the engine, an interior heat exchanger (4),
a circulating pump (8) for delivering a liquid heat carrier,
a bypass line (9) which connects a return line (6,6a,6b) between heat exchanger (4) and internal combustion engine (1) to a flow line (3,3a,3b) between internal combustion engine (1) and heat exchanger (4),
characterised in that the direction of rotation of the circulating pump (8) is reversible and according to the direction of rotation so it delivers the heat carrier through two separate outlet orifices (12, 13) either in a large circuit (6b,3a,3b,6a) through the return line (6b) to the internal combustion engine (1) or through the bypass line (9) into a small circuit (9,3b,6a) comprising the heating device (7) and the interior heat exchanger (4).

2. A heating circuit system according to Claim 1, characterised in that each of the outlet orifices (12,13) is connected to one of two chambers (16,17;16',17';16'',17'') of a valve (14,14',14'') which are separated from each other in sealing-tight manner by a movable part (15,15',25) and of which one (17,17',17'') can be connected to the return line (6b) while the other (16,16',16'') can be connected to the bypass line (9).

3. A heating circuit system according to Claim 2, characterised in that with the movable part (15,25) two sealing elements (18,22,18'',22') which project in each case into one of the chambers (16,17;16''17'') can be connected in order to control the opening and closing of the bypass line (9) and of the return line (6b).

4. A heating circuit system according to Claim 2 or 3, characterised in that the movable part consists of a diaphragm (15,15').

5. A heating circuit system according to Claim 2 or 3, characterised in that the movable part consists of a sealing piston (25).

6. A heating circuit system according to one of the preceding Claims, characterised in that the circulating pump (8) is reversed as a function of a temperature level of the heat carrier.

7. A heating circuit system according to Claim 6, characterised in that a temperature sensor (30) is provided for controlling the reversal of the circulating pump.

8. A heating circuit system according to Claim 7, characterised in that the temperature sensor (30) is disposed on the intake side of the circulating pump (8).

9. A heating circuit system according to one of Claims 2 to 5, characterised in that in the movable part (15,25) there is a passage (28) which can be controlled by an integrated thermostatic valve (27) to open or close.

10. A heating circuit system according to one of Claims 2 to 9, characterised in that the circulating pump (8) and the valve (14,14',14'') form one structural unit preferably mounted on the heating device (7).

## Revendications

1. Système à circuit de chauffage d'un véhicule comprenant
- un moteur à combustion interne (1),
- un appareil de chauffage (7) indépendant du moteur,
- un échangeur de chaleur (4) dans l'habitacle,
- une pompe de circulation (8) pour faire circuler un fluide caloporteur,
- une conduite de dérivation (9) qui relie une conduite de retour (6, 6a, 6b) entre l'échangeur de chaleur (4) et le moteur à combustion interne (1) à une conduite d'alimentation (3, 3a, 3b) entre le moteur à combustion interne (1) et l'échangeur de chaleur (4),
caractérisé en ce que
la pompe de circulation (8) est réversible et suivant son sens de rotation elle fait passer le fluide caloporteur par deux orifices de sortie séparés (12, 13) soit dans un grand circuit (6b, 3a, 3b, 6a) à travers la conduite de retour (6b) vers le moteur à combustion interne (1) soit par la conduite de dérivation (9) dans un petit circuit (9, 3b, 6a) comprenant l'appareil de chauffage (7) et l'échangeur de chaleur (4) de l'habitacle.

2. Système à circuit de chauffage selon la revendication 1,
caractérisé en ce que
chacun des orifices de sortie (12, 13) est relié à deux chambres (16, 17 ; 16', 17' ; 16'', 17'') d'une vanne (14, 14', 14''), séparées de manière étanche l'une par rapport à l'autre par une pièce mobile (15, 15', 25), l'une des chambres (17, 17', 17'') pouvant être reliée à la conduite de retour (6b) et l'autre chambre (16, 16', 16'') pouvant être reliée à la conduite de dérivation (9).

3. Système à circuit de chauffage selon la revendication 2,
caractérisé en ce que
deux éléments d'étanchéité (18, 22 ; 18'', 22'') qui se déplacent chaque fois dans l'une des chambres (16, 17 ; 16'', 17'') pour commander l'ouverture et la fermeture de la conduite de dérivation (9) et de la conduite de retour (6b) sont reliés à la pièce mobile (15, 25).

4. Système à circuit de chauffage selon la revendication 2 ou 3,
caractérisé en ce que
la pièce mobile est formée par une membrane (15, 15').

5. Système à circuit de chauffage selon la revendication 2 ou 3,
caractérisé en ce que
la partie mobile est formée par un piston d'étanchéité (25).

6. Système à circuit de chauffage selon l'une des revendications précédentes,
caractérisé en ce que
la commutation du sens de fonctionnement de la pompe de circulation (8) se fait en fonction d'une valeur de la température du fluide caloporteur.

7. Système à circuit de chauffage selon la revendication 6,
caractérisé par
un capteur de température (30) pour commuter le sens de fonctionnement de la pompe de circulation.

8. Système à circuit de chauffage selon la revendication 7,
caractérisé en ce que
le capteur de température (30) est prévu sur le côté aspirant de la pompe de circulation (8).

9. Système à circuit de chauffage selon l'une des revendications 2 à 5,
caractérisé par
un canal de passage (28) susceptible d'être ouvert et fermé par une soupape thermostatique intégrée (27) et prévue dans la partie mobile (15 ; 25).

10. Système à circuit de chauffage selon l'une des revendications 2 à 9,
caractérisé en ce que
la pompe de circulation (8) et la vanne (14 ; 14' ; 14'') forment un ensemble de préférence fixé sur l'appareil de chauffage (7).
